Europäisches Patentamt

European Patent Office

Office européen des brevets

(19)

(11) Publication number: **0 509 625 A2**

# EUROPEAN PATENT APPLICATION

(21) Application number: **92300188.7**

(22) Date of filing: **09.01.92**

(51) Int. Cl.5: **C04B 35/00**, C04B 35/48

(30) Priority: **18.04.91 JP 112109/91**

(43) Date of publication of application:
**21.10.92 Bulletin 92/43**

(84) Designated Contracting States:
**DE GB**

(71) Applicant: **MITSUI MINING & SMELTING CO., LTD.**
**1-1, Muromachi 2-chome Nihonbashi, Chuo-ku**
**Tokyo 103(JP)**

(72) Inventor: **Kaneko, Yasunari**
**No. 5-11, Seiwa-cho**

Otsu-shi, Shiga-ken(JP)
Inventor: **Kankawa, Yoshimitsu**
**No. 38-3, Seifu-cho**
Otsu-shi, Shiga-ken(JP)
Inventor: **Kasahara, Norio**
**No. 1100, Shimojo-Minamiwari, Tatsuoka-cho**
**Nirasaki-si, Yamanashi-ken(JP)**
Inventor: **Suzuki, Toshihisa**
**No. 893-3, Shindachi-Ichiba**
**Sennan-shi, Osaka(JP)**

(74) Representative: **Perry, Robert Edward**
**GILL JENNINGS & EVERY 53-64 Chancery Lane**
**London WC2A 1HN(GB)**

(54) Method of injection-molding zirconia ceramic.

(57) A method of manufacturing sinters by hot-kneading zirconia ceramic powder and an organic binder, injection-molding the kneaded mixture, removing the organic binder from the moldings, then burning the binder-removed moldings, characterized by

0.5 to 15 moles of at least one oxide chosen from yttrium oxide, magnesium oxide, calcium oxide, or cerium oxide being added to said zirconia ceramic powder;

The average particle size of said zirconia ceramic powder being equal to or smaller than 1 $\mu$m;

Said organic binder comprising one or more organic substances soluble to an alcohol or to a mixed solvent of an alcohol and a mixture of water, aliphatic ketone, and aromatic hydrocarbon, such as polyethylene glycol, glycol-fatty acid ester, glycerol-fatty acid ester, polyvinyl butyral, polyvinyl methyl ether, polyvinyl ethyl ether, and propionic acid vinyl, and one or more thermoplastic resins insoluble to an alcohol nor to the mixed solvent; and

said organic binder being removed from moldings formed by injection-molding by putting the moldings in contact with the alcohol or the mixed solvent to extract the substances soluble to the alcohol or to the mixed solvent in said organic binder, then heating the moldings in an oxidizing gas to remove the remaining substances insoluble to the alcohol nor to the mixed solvent in the organic binder.

By the improved organic binder and the improved removing method of the organic binder, the method of the present invention can injection-mold zirconia ceramic powder with average particle size 1 $\mu$m which requires addition of 55% by volume or more resins and is difficult to injection-mold by conventional methods. This method makes it possible to manufacture zirconia ceramic products with a high density and a high mechanical strength.

EP 0 509 625 A2

## BACKGROUND OF THE INVENTION

### a) Field of the Invention

The present invention relates to a method of kneading zirconia powder with an organic binder, injection-molding the kneaded powder, then removing the organic binder from the moldings before burning.

### b) Description of the Prior Art

Injection molding is widely used as a molding method in manufacturing of zirconia ceramic products. In the injection molding of zirconia powder, various organic compounds or thermoplastic resins are added to the powder to fluidize; the powder is hot-kneaded with those additives; the kneaded powder is injection-molded; the additives are removed from the moldings obtained; then the moldings are burned into products. It is generally known that the properties of zirconia ceramic sintered products improve by using material powder with 1 $\mu$m or smaller average particle size. The specific surface area of particles, though, increases as the particle size decreases, and hence a larger quantity of an organic binder is required to adequately fluidize the powder in injection molding, more than 50% by volume of an organic binder for powder with 1 $\mu$m or smaller average particle size. When removing the organic binder from moldings by heat-decomposition, the pressure inside the moldings rises and causes cracks or expansion in the moldings. For this reason, it has been difficult to use powder with 1 $\mu$m or smaller average particle size as the material.

A method of injection-molding powder with 1 $\mu$m or smaller average particle size is proposed in Japanese Patent Provisional Publication gazette No. 59 (1984) - 152260. However, this method has a problem that it cannot be applied to such fine powder as to need 55% by volume or more resins, because sintered products become porous and insufficient in strength as the quantity of resins increases over 55% by volume.

## SUMMARY OF THE INVENTION

An object of the present invention is to provide a method which, by use of an improved organic binder, can injection-mold zirconia ceramic material powder of 1 $\mu$m or smaller average particle size which needs addition of 55% by volume or larger quantity of resins and then can remove the resins from moldings without causing defects such as cracks and expansion in the moldings.

Another object of the present invention is to provide a method which makes it possible to manufacture complicate-shaped zirconia ceramic products efficiently and precisely, taking advantage of injection molding.

Yet another object of the present invention is to provide sintered products with a reduced low-temperature degradation and an increased durability and mechanical strength resulting from use of zirconia powder with small average particle size for the material.

The above objects have been attained by the method of the present invention, characterized by

0.5 to 15 moles of at least one oxide chosen from yttrium oxide, magnesium oxide, calcium oxide, or cerium oxide being added to the zirconia ceramic powder;

The average particle size of said zirconia ceramic powder being equal to or smaller than 1 $\mu$m;

Said organic binder comprising one or more organic substances soluble to an alcohol or to a mixed solvent of an alcohol and a mixture of water, aliphatic ketone, and aromatic hydrocarbon, such as polyethylene glycol, glycol-fatty acid ester, glycerol-fatty acid ester, polyvinyl butyral, polyvinyl methyl ether, polyvinyl ethyl ether, and propionic acid vinyl, and one or more thermoplastic resins insoluble to an alcohol nor to the mixed solvent; and

the organic binder being removed from moldings formed by injection-molding by putting the moldings in contact with the alcohol or the mixed solvent to extract the substances soluble to the alcohol or to the mixed solvent in the organic binder, then heating the moldings in an oxidizing gas to remove the remaining substances insoluble to the alcohol nor to the mixed solvent in the organic binder.

## DESCRIPTION OF THE PREFERRED EMBODIMENTS

The method of the present invention uses powder of 1 $\mu$m or smaller average particle size comprising zirconium oxide and 0.5 to 15 moles of at least one oxide chosen from yttrium oxide, magnesium oxide, calcium oxide, and cerium oxide for the material powder.

For the organic binder, the method of the present invention uses a mixture of one or more organic substances soluble to an alcohol or to a mixed solvent of an alcohol and a mixture of water, aliphatic ketone, and aromatic hydrocarbon, such as polyethylene glycol, glycol-fatty acid ester, glycerol-fatty acid ester, polyvinyl butyral, polyvinyl methyl ether, polyvinyl ethyl ether, and propionic acid vinyl; and one or more thermoplastic resins insoluble to an alcohol nor to the mixed solvent.

The material powder and the organic binder are mixed, kneaded, then injection-molded into the shapes of products. The thus-obtained moldings are put in contact with an alcohol or the mixed solvent to extract the organic substances soluble to the alcohol or to the mixed solvent in the organic binder. Then the remaining thermoplastic resins insoluble to the alcohol nor to the mixed solvent are removed in an oxidizing gas in a heating furnace.

These processes are described below in detail.

First, the material powder is prepared by mixing powders of zirconium oxide and at least one oxide chosen from yttrium oxide, magnesium oxide, calcium oxide, and cerium oxide, then grinding them to 1 $\mu$m or smaller average particle size. Added to this material powder is the above binder, and the mixture is hot-kneaded and formed into pellets. The powder in pellets is next injection-molded into the shapes of products.

The moldings obtained are then subjected to the removal of the binder. The moldings are first put in contact with an alcohol or the above mixed solvent. By this treatment, the organic substances soluble to an alcohol or to the mixed solvent in the organic binder - polyethylene glycol, glycol-fatty acid ester, glycerol-fatty acid ester, polyvinyl butyral, polyvinyl methyl ether, polyvinyl ethyl ether, propionic acid vinyl, or a mixture of them - dissolve quickly into the solvent at ordinary temperature. The moldings are next heated in a oxidizing gas in a furnace in order to decompose and gasify the remaining constituents insoluble to the alcohol nor to the mixed solvent.

Thus using an alcohol or a mixed solvent of an alcohol and a mixture of water, aliphatic ketone, and aromatic hydrocarbon for the extraction solvent, and a mixture of organic substance(s) soluble to an alcohol or to the mixed solvent and thermoplastic resin(s) insoluble to the alcohol nor to the mixed solvent for the organic binder kneaded with the material powder, extraction and heat-decomposition of the organic binder can be carried out without problems; thereby moldings without cracks or expansion, and consequently dense sintered products can be obtained.

By use of the organic binder and removal of the binder by combination of extraction and heat-decomposition as described above, the method of the present invention can injection-mold zirconia powder with small average particle size and large specific surface area which is difficult to injection-mold by conventional method, and thereby makes it possible to manufacture complicate-shaped sintered products effectively and precisely. Products obtained by this method has a reduced low-temperature degradation and an increased durability and mechanical strength.

Examples

Powders shown in Table 1, each 100 parts by weight, and organic binders shown in Table 2 were mixed and hot-kneaded at 160 °C for 40 minutes using a kneader. The kneaded mixtures were crushed into pellets, and injection-molded into cylindrical rods 60 mm in length and 6 mm in diameter under the conditions shown in Table 3 by a injection molding machine.

The thus-obtained rods were subjected to the extraction under the conditions shown in Table 3. Ten moldings were put in each solvent of 200 cc. The heat-decomposition thereafter was carried out heating from 50 to 420 °C in the air. The moldings were then burned into zirconia ceramic under the conditions shown in Table 4. Also shown in Table 4 are the results of external inspection of the binder-removed moldings and measurements of the density of the sintered samples.

The moldings of the comparative examples cracked during the heat-decomposition treatment, though the heating times were longer than those of the moldings of the examples.

The moldings of the examples required a shorter time than those of the comparative examples for the removal of the organic binder, and further the sintered samples obtained from them have a larger density with no cracks and expansion.

3

Table 1

|   | Zirconium Oxide (mol%) | Yttrium Oxide (mol%) | Average Particle Size (μm) | Specific Surface Area (m²/g) |
|---|---|---|---|---|
| a | 97 | 3 | 0.3 | 15 |
| b | 97 | 3 | 0.4 | 7 |
| c | 97 | 3 | 0.2 | 15 |
| d | 97 | 3 | 0.6 | 7 |
| e | 97 | 3 | 0.5 | 8 |
| f | 97 | 3 | 0.2 | 30 |
| g | 92 | 8 | 0.1 | 10 |
| h | 92 | Magnecium oxide 8 | 0.3 | 7 |
| i | 91 | Carcium oxide 9 | 0.4 | 8 |
| j | 88 | Cerium oxide 12 | 0.2 | 15 |

Table 2

| Mixture Ratio of Components of Binder (Parts by Weight to 100 Parts by Weight of Ziconia Ceramic) | |
|---|---|
| a | EVA(6), APP(2), PEG600(6.5), PEG1000(6.5) |
| b | EVA(6.5), APP(4), PEG600(9), PEG1000(9) |
| c | EVA(7), APP(5), PEG1000(19) |
| d | EVA(6), APP(2), PEG1000(10), PVB(3) |
| e | EVA(6), PBMA(1), APP(2), PEG1500(5), PEG600(5), DBP(3) |
| f | EVA(5), PBMA(5), APP(3), WAXmp.46(4), DBP(2) |
| g | PS(6), PBMA(5), APP(3), WAXmp.46(5), DBP(1) |
| h | EVA(6), PBMA(6), APP(3), WAXmp.46(6), DBP(1.5) |
| i | EVA(7), PBMA(7), APP(4), WAXmp.46(8), DBP(2) |

EVA: Ethylene-vinyl acetate copolymer
APP: Amorphous polyolefine
PS: Polystyrene
PBMA: Polybutyle methacrylate
WAXmp.46: Paraffin wax
DBP: Dibutyle phtalate
PEG600: Polyethylene glycol (Molecular weight 600)
PEG1000: Polyethylene glycol (Molecular weight 1000)
PEG1000: Polyethylene glycol (Molecular weight 1500)
PVB: Polyvinyl butyral

Table 3

| | | Mixture ratio | | | Molding | | Extraction | | Heat Decomp |
|---|---|---|---|---|---|---|---|---|---|
| | Ceramic | Binder | Vol Ratio (Bin/Cer) | Temp (°C) | Pressure (kg/cm$^2$) | Solvent (Vol Ratio) | Time (hr) | Time (hr) |
| **Example** | | | | | | | | |
| 1 | a | b | 62.23 | 110 | 660 | Methanol | 6 | 8 |
| 2 | b | a | 54.85 | 120 | 660 | Methanol | 1 | 4 |
| 3 | c | d | 54.95 | 110 | 660 | Ethanol(80%) Acetone(20%) | 6 | 8 |
| 4 | d | e | 56.21 | 110 | 660 | Methanol(50%) Water(50%) | 2 | 4 |
| 5 | e | a | 54.85 | 110 | 660 | Ethanol | 4 | 4 |
| 6 | f | c | 64.28 | 100 | 660 | Methanol(75%) Acetone(25%) | 8 | 8 |
| 7 | g | b | 62.23 | 120 | 660 | Ethanol(80%) Acetone(20%) | 6 | 8 |
| 8 | h | a | 53.59 | 110 | 660 | Methanol(75%) Acetone(25%) | 6 | 8 |
| 9 | i | a | 53.38 | 110 | 660 | Methanol | 6 | 8 |
| 10 | j | b | 62.92 | 120 | 660 | Methanol | 6 | 8 |
| **Comparative Example** | | | | | | | | |
| 1 | a | h | 58.66 | 160 | 660 | | | 25 |
| 2 | b | f | 54.35 | 160 | 660 | | | 25 |
| 3 | d | g | 54.86 | 170 | 900 | | | 25 |
| 4 | f | i | 63.97 | 160 | 660 | | | 25 |

5

Table 4

| | Mixture ratio | | External Inspec. of Binder-removed Moldings | Sintering Temp. ( °C ) | Density (g/cm$^3$) | Three-point Bending Strength (n=5, Mpa) |
|---|---|---|---|---|---|---|
| | Ceramic | Binder | | | | |
| **Example** | | | | | | |
| 1 | a | b | No cracks or expan. | 1550 | 6.03 | 920 |
| 2 | b | a | No cracks or expan. | 1550 | 6.04 | 1050 |
| 3 | c | d | No cracks or expan. | 1550 | 6.03 | 900 |
| 4 | d | e | No cracks or expan. | 1550 | 6.03 | 875 |
| 5 | e | a | No cracks or expan. | 1550 | 6.03 | 945 |
| 6 | f | c | No cracks or expan. | 1400 | 6.01 | 805 |
| 7 | g | b | No cracks or expan. | 1550 | 5.90 | 810 |
| 8 | h | a | No cracks or expan. | 1550 | 5.75 | 615 |
| 9 | i | a | No cracks or expan. | 1550 | 5.70 | 605 |
| 10 | j | b | No cracks or expan. | 1550 | 6.23 | 700 |
| **Comparative Example** | | | | | | |
| 1 | a | h | Cracks and expan. | | | |
| 2 | b | f | Cracks and expan. | | | |
| 3 | d | g | Cracks and expan. | | | |
| 4 | f | i | Cracks and expan. | | | |

The moldings of example 1 in Table 3 were put in methanol for 1 to 12 hours, and vacuum-dried at 40 °C for 30 minutes. The ratio of extracted binder (the quantity of the extracted organic binder/the total quantity of the organic binder) to the extraction time were calculated based on the weight of the moldings dried and shown in Table 5. The extraction temperature for this measurement was 25 °C.

The moldings dried were put in an open furnace, heated to 420 °C at a temperature rising rate of 5, 50, and 100 °C/hour, maintained at 420 °C for 1 hour, then cooled in the furnace, respectively, to remove the remaining organic binder. The results of external inspection of the binder-removed moldings are also shown in Table 5. The top-shaped moldings of comparative examples 1 to 4 in Table 3 were also subjected to the same binder-removing treatment, and the results of the external inspection of the binder-removed moldings were also shown in Table 5.

It is known from the results shown in Table 5 that binder-removed moldings without cracks or expansion were obtained from the moldings of example 1 by 1 hour of extraction and 100 °C/hour of rising rate of temperature, but not from the moldings of comparative examples 1 to 4 even by 5 °C/hour of rising rate of temperature.

Binder-removed moldings of examples 1 to 10 were burned at 1550 °C for 2 hours in the air. The sinters obtained have a high density without cracks or expansion regardless of the properties of the zirconia ceramic powder used and the average particle size and specific surface area after ground. Especially as shown by example 6, sinters of density 6.01 g/cm$^3$ without cracks or expansion were obtained by 8 hours of extraction, 8 hours of hot-decomposition, and burning from zirconia ceramic powder with specific surface area 30 m$^2$/g from which good sinters are difficult to obtain by the conventional methods. All the samples had a high three-point-bending strength without being polished.

Table 5

| | | Extraction Time (hr) | Extration Ratio (%) | Fraction Good (Number of Good Samples/Total Number of samples) | | |
|---|---|---|---|---|---|---|
| | | | | Rising Rate of Temp.( °C /hr) | | |
| | | | | 5 | 50 | 100 |
| Example 1 (Extracted with Methanol) | | 1 | 33 | 10/10 | 10/10 | 10/10 |
| | | 2 | 47 | 10/10 | 10/10 | 10/10 |
| | | 3 | 54 | 10/10 | 10/10 | 10/10 |
| | | 12 | 63 | 10/10 | 10/10 | 10/10 |
| Comp. Expl | 1 | 0 | 0 | 0/10 | 0/10 | 0/10 |
| | 2 | 0 | 0 | 0/10 | 0/10 | 0/10 |
| | 3 | 0 | 0 | 0/10 | 0/10 | 0/10 |
| | 4 | 0 | 0 | 0/10 | 0/10 | 0/10 |

## Claims

1. A method of manufacturing sinters by hot-kneading zirconia ceramic powder and an organic binder, injection-molding the kneaded mixture, removing the organic binder from the moldings, then burning the binder-removed moldings, characterized by

   0.5 to 15 moles of at least one oxide chosen from yttrium oxide, magnesium oxide, calcium oxide, or cerium oxide being added to said zirconia ceramic powder;

   The average particle size of said zirconia ceramic powder being equal to or smaller than 1 μm;

   Said organic binder comprising one or more organic substances soluble to an alcohol or to a mixed solvent of an alcohol and a mixture of water, aliphatic ketone, and aromatic hydrocarbon, such as polyethylene glycol, glycol-fatty acid ester, glycerol-fatty acid ester, polyvinyl butyral, polyvinyl methyl ether, polyvinyl ethyl ether, and propionic acid vinyl, and one or more thermoplastic resins insoluble to the alcohol nor to the mixed solvent; and

   said organic binder being removed from moldings formed by injection-molding by putting the moldings in contact with the alcohol or the mixed solvent to extract the substances soluble to the alcohol or to the mixed solvent in said organic binder, then heating the moldings in an oxidizing gas to remove the remaining substances insoluble to the alcohol nor to the mixed solvent in the organic binder.

2. The method in claim 1, in which said organic substance(s) soluble to an alcohol or to the mixed solvent is polyethylene glycol or a mixture of polyethylene glycol and one or more other organic substances soluble to the alcohol or to the mixed solvent.

3. The method in claim 1, in which said alcohol is methanol.

4. The method in claim 1, in which said mixed solvent is a mixture of methanol, water, and acetone.